Europäisches Patentamt

European Patent Office

Office européen des brevets

(19)

(11) Veröffentlichungsnummer : **0 053 757**
**B1**

(12) **EUROPÄISCHE PATENTSCHRIFT**

(45) Veröffentlichungstag der Patentschrift :
**11.04.84**

(21) Anmeldenummer : **81109871.4**

(22) Anmeldetag : **25.11.81**

(51) Int. Cl.³ : **F 28 G 15/02**, F 28 G 13/00,
B 23 P 19/02

(54) **Vorrichtung zum Herausziehen und Hineinschieben von Rohrbündeln bei Wärmetauschern.**

(30) Priorität : **10.12.80 DE 3046467**

(43) Veröffentlichungstag der Anmeldung :
**16.06.82 Patentblatt 82/24**

(45) Bekanntmachung des Hinweises auf die Patenterteilung : **11.04.84 Patentblatt 84/15**

(84) Benannte Vertragsstaaten :
**FR GB IT NL**

(56) Entgegenhaltungen :
CH-A- 172 558
CH-A- 460 286
DE-A- 1 904 620
DE-A- 2 249 948
DE-A- 2 424 008
GB-A- 951 564
GB-A- 1 465 605
GB-A- 2 000 715
US-A- 3 836 015

(73) Patentinhaber : **Bauch, Ludwig**
**Kirchweg 7**
**D-8079 Egweil (DE)**

(72) Erfinder : **Bauch, Ludwig**
**Kirchweg 7**
**D-8079 Egweil (DE)**

(74) Vertreter : **Sasse, Volker, Dipl.-Ing.**
**Chiemgaustrasse 8a**
**D-8070 Ingolstadt/Do. (DE)**

EP 0 053 757 B1

## Vorrichtung zum Herausziehen und Hineinschieben von Rohrbündeln bei Wärmetauschern

Die Erfindung betrifft eine Vorrichtung gemäß dem Oberbegriff des Hauptanspruchs.

Es ist eine derartige Vorrichtung in der Praxis bekannt (Prospekt « Pijpenbundeltrekker » der Firma Peinemann RV Rotterdam NL), bei der auf dem Führungsrahmen ein langgestrecktes Gehäuse verschiebbar ist, das einen in Rahmenlängsrichtung ausgerichteten, langen Hydraulikzylinder trägt. Das Gehäuse ist auf dem Rahmen sowohl verschiebbar als auch in beliebigen Schiebestellungen festlegbar. Am Ende der Kolbenstange des Hydraulikzylinders ist ein Querjoch angeordnet, das mit dem Bündelkopfflansch verbindbar ist. Der Führungsrahmen ist ferner an einem Ende derart verlängert ausgebildet, daß er am Ende des Wärmetauschers abgestützt werden kann. Der Führungsrahmen befindet sich in einem tieferliegenden und verbreiternden Stützrahmen, in dem auch Antriebsmotoren, Hydraulikmotoren, Steuerventile und dgl. untergebracht sind. An den Stützrahmen greift ferner ein rahmenartiger Aufbau an, der oberseitig in den Lasthaken eines Hebezeugs eingehängt werden kann. Der Aufbau übergreift den Stützrahmen und den Führungsrahmen portalartig, wobei zwischen dem Stützrahmen und dem Aufbau eine Schiebeführung angeordnet ist. Ein Hydraulikzylinder kann den Aufbau relativ zum Stützrahmen in Längsrichtung verschieben. Auf dem Führungsrahmen sind ferner vor dem den Hydraulikzylinder tragenden Gehäuse mehrere Stützlager vorgesehen, auf die Holzkeile gelegt und zur Abstützung mit Schraubspindeln unter das Bündel gedrückt werden. Diese Vorrichtung wird zum Herausziehen und zum Einschieben von Rohrbündeln für Wärmetauscher eingesetzt. In Industrieanlagen mit größeren Wärmetauschern müssen die Rohrbündel der Wärmetauscher in vorbestimmten Abständen gereinigt werden. Zu diesem Zweck sind die Rohrbündel aus dem Wärmetauscher herauszuziehen und in eine Reinigungsanlage zu transportieren. Die bekannte Vorrichtung wird zu diesem Zweck mit einem Transportfahrzeug zum Aufstellungsort des Wärmetauschers gefahren und an den Lasthaken eines Hebezeugs angehängt. Dann wird die Vorrichtung vor dem zu reinigenden Wärmetauscher angehoben, bis das Abstützen des Führungsrahmens auf das Kopfende des Wärmetauschers ausgerichtet ist und sich am Wärmetauscher abstützt. Dann wird das Querjoch des Hydraulikzylinders mit dem Bündelkopfflanschzug fest verbunden. Der Führungsrahmen wird durch Einjustieren mit dem Hebezeug parallel zur Längsachse des Wärmetauschers ausgerichtet. Daraufhin zieht der Hydraulikzylinder mit seiner Kolbenstange über deren möglichen Hubweg das Rohrbündel aus dem Wärmetauscher. Am Ende des Hubweges muß das Gehäuse mit dem Hydraulikzylinder wieder um die Hublänge der Kolbenstange weitergefahren werden, da kein Hydraulikzylinder mit einem so großen Hub eingesetzt werden kann, der der Länge des Rohrbündels in Wärmetauschern entspräche. Auf diese Weise wird in einzelnen Schritten das Rohrbündel bis auf den Führungsrahmen gezogen, wobei dazwischen die Stützlager derart hochgeschraubt werden, daß das Rohrbündel an seinem hinteren Ende schließlich auf den Stützlagern aufliegt. Danach wird die Verbindung zwischen dem Führungsrahmen und dem Wärmetauscher gelöst, wobei der seitlich angeordnete Hydraulikzylinder eine Längsverschiebung des Aufbaus relativ zum Stützrahmen herbeigeführt wird, damit die gesamte Vorrichtung am Lasthaken im Gleichgewicht hängt. Dann wird die Vorrichtung auf den Boden abgesenkt und vom Hebezeug abgekoppelt. Das Hebezeug übernimmt das Rohrbündel und legt es auf ein Fahrzeug, das zum Reinigungsort fährt. Das Einsetzen des Rohrbündels erfolgt dann in umgekehrter Reihenfolge. Bei dieser bekannten Vorrichtung ist der große Aufwand für das Herausziehen und das Hineinschieben eines Rohrbündels nachteilig. Neben der Vorrichtung ist nämlich auch das Hebezeug und ein Transportfahrzeug erforderlich. Ferner ist die Vorrichtung außerordentlich schwer und baut sehr groß. Das Herausziehen und Hineinschieben erfolgt schrittweise und relativ langsam, es sind mindestens vier Bedienungspersonen erforderlich, die das Arbeiten überwachen. Es besteht ständig die Gefahr, daß die Vorrichtung am Lasthaken kippt. Ungünstig ist ferner, daß in der Nachbarschaft von Wärmetauschern in der Regel Rohrleitungen, Vorbauten oder andere Bauteile vorliegen, die den Zutritt für das Hebezeug erschweren.

Der Erfindung liegt die Aufgabe zugrunde, eine Vorrichtung der eingangs genannten Art zu schaffen, mit welcher die vielfältigen Probleme beim Herausziehen und Hineinschieben eines Rohrbündels bei einem Wärmetauscher mit weniger maschinellem, weniger technischem und weniger personellen Aufwand lösbar sind. Zudem soll die zu schaffende Vorrichtung — was bisher nicht möglich war — eine Gefährdung für die Hilfskräfte und die Aufbauten und das Hebezeug ausschließen.

Die gestellte Aufgabe wird erfindungsgemäß durch die im kennzeichnenden Teil des Hauptanspruchs angegebenen Merkmale gelöst.

Dadurch, daß die Vorrichtung in ein Fahrzeug integriert ist, das sowohl zum Herausziehen als auch zum Hineinschieben des Rohrbündels und darüber hinaus auch für den Transport des Rohrbündels geeignet ist, wird der maschinelle, personelle und technische Aufwand für diese Arbeiten erheblich vermindert. Es ist kein gesondertes Hebezeug oder ein Transportfahrzeug mehr erforderlich. Ferner genügt eine Bedienungsperson zur Bedienung des Fahrzeuges. Das Herausziehen oder Hineinschieben erfolgt wesentlich rascher, als es bisher möglich war. Gefahren für die Bedienungsperson oder Gebäude sind ausgeschlossen. Die Vorrichtung kann zudem unabhängig von störenden Rohrleitungen, Vorbauten oder Energiekanälen eingesetzt werden, da durch die exzentrische Anordnung der Hubsäule auf dem Fahrzeug und durch Drehen der Hubsäule mit dem Führungsrahmen alle denkbaren Arbeitspositionen eingenommen werden können, so daß auch schwierige Platzverhältnisse keine Probleme bedeuten. Mit der Vorrichtung wird das Rohrbündel aus dem Wärmetauscher gezogen, zum Reinigungsort gebracht, vom Reinigungsort wieder zurücktransportiert und wieder in den Wärmetauscher eingeschoben.

Eine für die Praxis zweckmäßige Ausführungsform der Erfindung spricht Anspruch 2 an. Durch die Versetzung der Hydraulikzylinder lassen sich die Teleskopabschnitte relativ einfach übereinander schieben, so daß der Führungsrahmen leicht bis auf den Fahrzeugrahmen abgesenkt werden kann, was für den Transport besonders vorteilhaft ist.

Eine zweckmäßige Ausführungsform der Erfindung geht aus Anspruch 3 hervor. Durch die Versetzung des Führungsrahmens kann die Hubsäule relativ nahe an den jeweiligen Wärmetauscher herangefahren werden, ohne daß die Auskraglänge übermäßig groß wäre. Mit der Vorrichtung können Wärmetauscher bedient werden, die in allen möglichen Höhenlagen zwischen dem Niveau des Fahrzeugrahmens oder dem höchsten Punkt der Hubsäule liegen.

Es ist ferner vorteilhaft, wenn die Merkmale von Anspruch 4 gegeben sind, da hierbei eine feinfühlige Steuerung der Drehbewegung der Hubsäule möglich ist und diese in der Lage ist, auch schwere Rohrbündel zu tragen.

Bei der bekannten Vorrichtung war es nachteilig, daß der für das Ziehen und Schieben des Rohrbündels verantwortliche Hydraulikzylinder die Länge des Führungsrahmens und dessen Gewicht unnötig vergrößerte. Zudem konnte das Ziehen oder Schieben nur in Schritten durchgeführt werden. Der erfindungsgemäß eingesetzte Hydraulikmotor mit dem Abtriebsgetriebe baut in Längsrichtung des Führungsrahmens verhältnismäßig kurz. Der Zug- oder Druckvorgang kann in einem Schritt ablaufen und wird in seiner Hublänge nur durch die Länge der Zahnstangen begrenzt. Diese Art der Kraftübertragung kann zudem zu einer sehr gleichmäßigen und trotzdem kräftigen Bewegung genutzt werden. Es läßt sich beispielsweise eine Zuggeschwindigkeit von 6 m pro Minute erreichen.

Ein weiteres, wichtiges Merkmal der Erfindung geht aus Anspruch 6 hervor. Diese Stützlager können automatisch dann unter das Rohrbündel gefahren werden, wenn dies für die möglichst schonende Behandlung des Rohrbündels zweckmäßig ist. Da sie im Führungsrahmen versenkt untergebracht sind, kann die Zug- und Druckvorrichtung bis ans äußerste Ende des Führungsrahmens gefahren werden.

Ein weiteres, die Handhabung vereinfachendes Merkmal der Erfindung geht aus Anspruch 7 hervor. Infolge dieser Ausbildung kann insbesondere das Ansetzen des Führungsrahmens an den Bündelkopfflansch vereinfacht und sehr feinfühlig gesteuert werden. Zudem wird mit diesem Hydraulikzylinder die Vorrichtung so eingestellt, daß der Schwerpunkt des Führungsrahmens mit dem daraufliegenden Rohrbündel in etwa neben dem Zentrum der Hubsäule zu liegen kommt. Ferner ist es auch möglich, ein Bündel zu ziehen, dessen Länge größer ist als der Ziehschlittenhub.

Da es wünschenswert ist, an den oberen Teleskopabschnitten der Hubsäule und auf den Führungsrahmen selbst möglichst wenig unnötiges Gewicht anzuordnen, ist eine Ausführungsform zweckmäßig, wie sie Anspruch 8 angibt. Die Hydraulikversorgung aller hydraulischen Aggregate im Bereich des Führungsrahmens und der Hubsäule wird so vom Fahrzeugunterbau aus bewerkstelligt. Insbesondere der Führungsrahmen wird dadurch leicht und frei von störenden Aggregaten. Es hat sich besonders vorteilhaft und preisgünstig gezeigt, den Fahrzeugrahmen unterhalb der Radachsen aufzuhängen.

Bei einer weiteren Ausführungsform sind die in Anspruch 9 hervorgehobenen Merkmale gegeben. Diese Abstützung ist zweckmäßigerweise so ausgebildet, daß sie zum Herausziehen des Rohrbündels auf Druck und zum Hineinschieben des Rohrbündels auf Zug belastet wird und sich am Wärmetauscher oder dessen Endflansch verankern läßt.

Eine besonders stabile Ausbildung des Führungsrahmens ergibt sich gemäß Anspruch 10. Zudem liegt die Zug-Druckvorrichtung in einer anderen Ebene, als die Hebeböcke, so daß diese sich in ihren relativen Bewegungen gegenseitig nicht behindern können.

Eine besonders einfache Ausführungsform der Erfindung geht aus Anspruch 11 hervor. Die Zug- und Druckvorrichtung baut kompakt und klein und ist verhältnismäßig leicht. Die Anordnung ist zudem wartungsfreundlich bzw. wartungsarm.

Günstig ist ferner, wenn eine Ausführungsform gewählt wird, wie sie Anspruch 12 erläutert. Es wird durch diese Ausbildung keine überflüssige Länge verschenkt, da der Bündelkopfflansch unmittelbar in der Zug- und Druckvorrichtung sitzt.

Ein weiteres, zweckmäßiges Ausführungsbeispiel der Erfindung gibt Anspruch 13 an. Diese Ausbildung der Hebeböcke führt zu einer besonders schonenden Abstützung der verhältnismäßig empfindlichen Rohrbündel. Zudem bietet der Einsatz von Rollenpaaren den Vorteil, daß das Rohrbündel mit geringer Mühe auf dem Führungsrahmen verdreht werden kann. Der Hydraulikzylinder fährt die Rollen des Hebebockes selbsttätig zwischen den Längsholmen des Führungsrahmens hoch, sobald das Rohrbündel abzustützen und/oder zu drehen ist.

Schließlich ist auch das in Anspruch 14 angegebene Merkmal wichtig. Durch diese Maßnahme läßt sich die Vorrichtung auch zum Entfernen der Abdeckung des Wärmetauschers einsetzen, wofür ansonsten ein selbständiges Hebezeug oder dgl. erforderlich wäre.

Eine Ausführungsform der Erfindung wird nachstehend anhand der Zeichnung erläutert.

Es zeigen

Figur 1 eine schematische Seitenansicht eines erfindungsgemäßen Fahrzeuges mit bereits ausgezogenem und aufgeladenem Rohrbündel,

Figur 2 eine vergrößerte Seitenansicht, teilweise im Schnitt, des Fahrzeuges,

Figur 3 eine Vorderansicht des in der Stellung von Fig. 2 stehenden Fahrzeuges und

Figur 4 einen Schnitt in der Ebene II-II von Fig. 2.

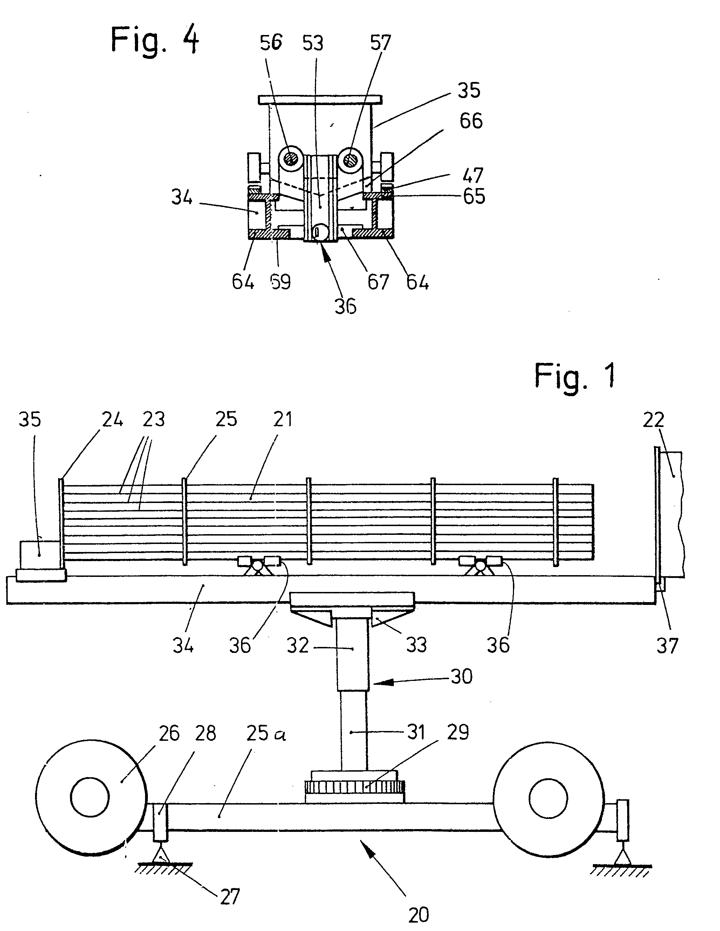

Aus Fig. 1 geht eine in ein Fahrzeug 20 eingegliederte Vorrichtung 30 zum Herausziehen und Hineinschieben eines Rohrbündels 21 aus einem bzw. in einen Wärmetauscher 22 hervor. Das Rohrbündel 21 besteht aus einer Vielzahl von Wärmetauscherrohren 23, die vorderendig durch einen Bündelkopfflansch 24 zusammengefaßt und im Verlauf ihrer Längerstreckung durch Zwischenstützringe 25 abgestützt werden und ein zylinderförmiges, langgestrecktes Gebilde mit erheblichem Gewicht bilden.

Das Fahrzeug 20 besitzt einen Fahrzeugrahmen 25a aus nicht näher dargestellt verbundenen Trägern, an denen Räder 26 sowie ausfahrbare Stützen 28 mit auf den Boden absetzbaren Stützfüßen 27 angeordnet sind. Mit den Stützfüßen 27 kann das Fahrzeug 20 soweit angehoben werden, daß es stabil steht und die Räder 26 keinen Bodenkontakt mehr haben.

Wie die Figuren 1, 2 und 3 zeigen, ist auf dem Fahrzeugrahmen 25a ein zur Querachse als auch stark zur Längsachse des Fahrzeuges seitlich versetzter Drehkranz 29 angeordnet, auf dem eine aus drei ineinanderschiebbaren Teleskopabschnitten 31, 32 und 38 bestehende Hubsäule drehbar angebracht ist. Die Anordnung ist dabei so getroffen, daß der Teleskopabschnitt 31 im Inneren des Teleskopabschnittes 32 gleiten kann, während der Teleskopabschnitt 32 im Inneren des Teleskopabschnittes 38 gleiten kann. Dies bedeutet, daß der Teleskopabschnitt 38 über die beiden anderen Teleskopabschnitte 32 und 31 bis in die Nähe des Drehkranzes 29 abgesenkt werden kann.

Am Teleskopabschnitt 38 ist eine als horizontale Schiebeführung ausgebildete Halterung 33 angebracht, die einen horizontal verlaufenden, langgestreckten Führungsrahmen 34 aufnimmt. Auf der Oberseite des Führungsrahmens 34 ist eine Zug- und Druckvorrichtung 35 in Rahmenlängsrichtung verfahrbar. Wie insbesondere Fig. 4 zeigt, sind im Inneren des Führungsrahmens 34 hydraulisch betätigbare Hebeböcke 36 verfahrbar untergebracht. Am einem Ende des Führungsrahmens ist eine nicht näher dargestellte Abstützeinrichtung 37 vorgesehen, die am Wärmetauscher 22 bzw. dessen Kopfende 24 festgelegt werden kann.

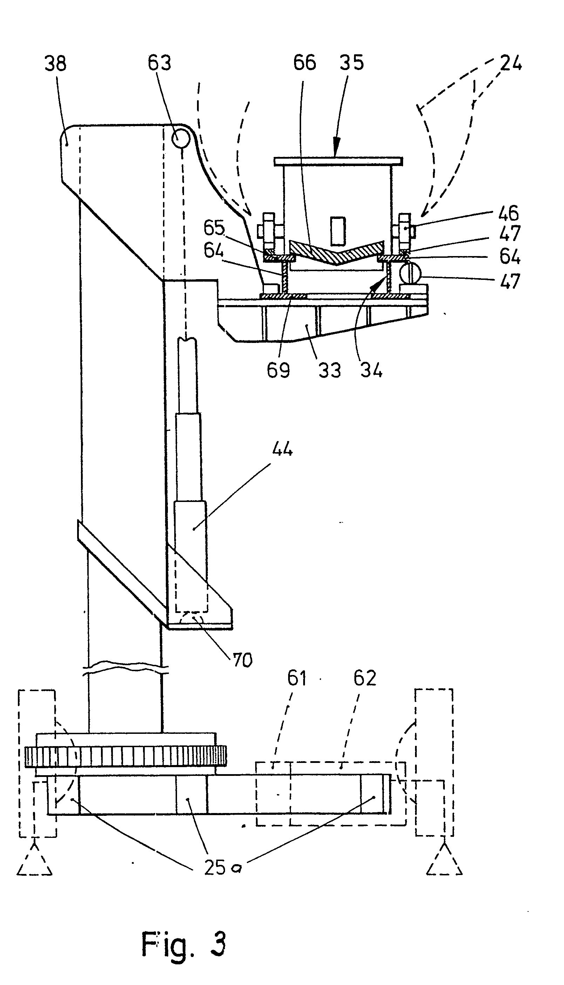

Die Hubsäule stützt sich über den untersten Teleskopabschnitt 31 und eine Trageplatte 39 auf dem Drehkranz 29 ab. Verstrebungen 40 sorgen für eine gute Steifigkeit in diesem Bereich. Ein Antriebsmotor 41 greift mittels eines Ritzels 42 in den Drehkranz 29 derart an, daß er bei Betätigung die Hubsäule um 360° relativ zum Fahrzeugrahmen 25a verdrehen kann. Im Inneren des Teleskopabschnittes 31 ist ein erster Hydraulikzylinder 43 angelenkt, dessen oberes und nicht dargestelltes Ende in den Teleskopabschnitt 32 führt und dort angelenkt ist. Am unteren Ende des Teleskopabschnittes 32 (Fig. 3) ist eine auskragende Konsole 70 angeordnet, auf der sich ein weiterer Hydraulikzylinder 34 abstützt, dessen anderes Ende bei 63 im Teleskopabschnitt 38 verankert ist. Der Hydraulikzylinder 44 ist gegenüber dem Hydraulikzylinder 43 versetzt, so daß sich diese beiden Zylinder bei der Bewegung der Teleskopabschnitte nicht behindern.

In der Zug- und Druckvorrichtung 35 ist ein Hydraulikmotor 45 angeordnet, der über ein Abtriebsgetriebe auf ein seitlich vorstehendes Antriebsritzel 46 arbeitet, das mit einer an der Oberseite des Führungsrahmens 34 angeordneten, längsverlaufenden Zahnstange 47 zusammenarbeitet. Zahnstange 47 und Ritzel 46 können an beiden Seiten der Zug- und Druckvorrichtung 35 sowie des Führungsrahmens 34 angeordnet sein.

Der Führungsrahmen 34 ist in der Halterung 33 in seiner Längsrichtung verschiebbar. Seine jeweilige Schiebelage wird durch einen Hydraulikzylinder 48 überwacht, der sich mit einem Ende in der Halterung 33 und mit seinem anderen Ende in einem Lager 49 abstützt.

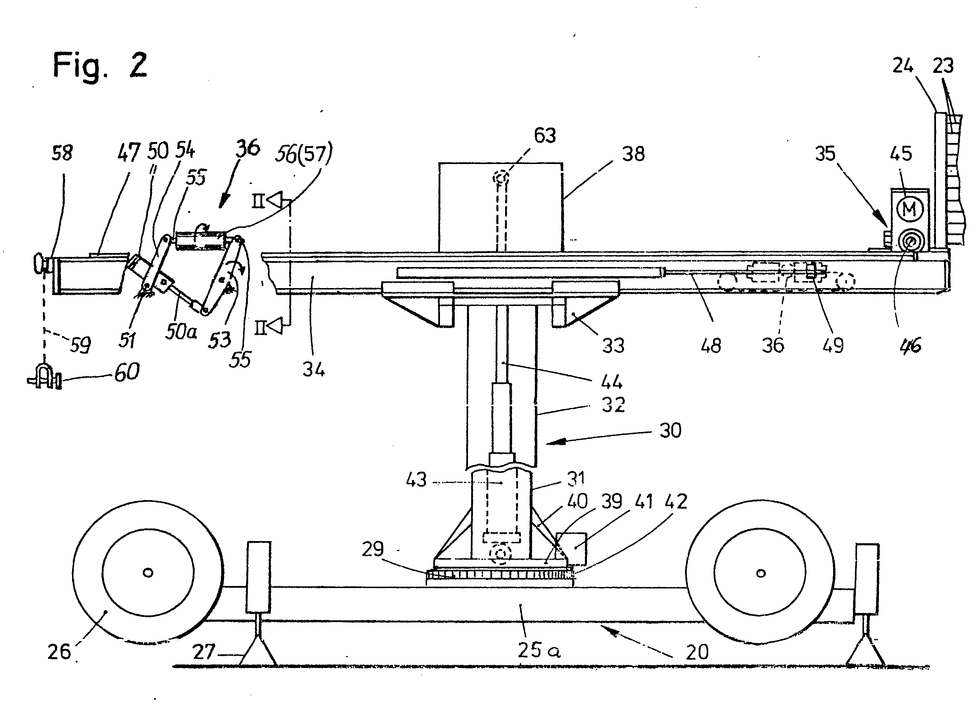

Jeder Hebebock 36 enthält zwei parallel liegende Tragerollen 56, 57, deren Achsen 55 in Rahmenlängsrichtung liegen. Die Enden der Achsen 55 greifen an annähernd parallel stehende Gelenkhebel 53 und 54 an, von denen der in einem Lager 51 und der andere an der Schubstange 50a eines schwenkbar gelagerten Hydraulikzylinders 50 angreift. Der an der Schubstange 50a angreifende Gelenkhebel 53 ist mittig in einem Lager 51a gehalten. Wenn der Hydraulikzylinder 50 seine Schubstange 50a ausfährt, werden die Tragerollen 56, 57 waagerecht angehoben. Die Hebeböcke 36 können aus der in Fig. 2 gezeigten Lage, in der die Tragerollen 56, 57 oberhalb der Oberkante des Führungsrahmens 34 liegen, durch Einziehen des Hydraulikzylinders 50 soweit abgesenkt werden, daß sie im Inneren des Führungsrahmens zu liegen kommen. Damit fügen sie sich ohne hinderlich zu sein, günstig in den Führungsrahmen ein.

Am freien Ende des Führungsrahmens 34 ist ferner eine Anschlußmöglichkeit 58 für ein Hebezeug 59 mit einem Lasthaken 60 angeordnet, das zum Anheben von z. B. dem Verschlußdeckel des Wärmetauschers benutzt werden kann.

Fig. 3 deutet an, daß im Rahmen 25 des Fahrzeuges ein Fahrmotor 62 sowie eine Hydraulikpumpe 61 mit einem zugehörigen Tank für Hydraulikflüssigkeit untergebracht sind, von denen über nicht dargestellte Leitungen sämtliche hydraulischen Aggregate im Führungsrahmen, in der Zug- und Druckvorrichtung 35 und in der Hubsäule selbst mit Hydraulikflüssigkeit versorgt werden.

Der Führungsrahmen 34 geht aus den Figuren 3 und 4 im Schnitt hervor und besteht aus zwei in einem Abstand gegenüberliegenden, zueinander parallelen I-Trägern 64, deren Obergurte 65 eine Führungsbahn für einen Schlitten 66 und deren Untergurte 69 eine Führungsbahn für die Hebeböcke 36 bilden. Der Schlitten 66 ist im Querschnitt V-förmig und trägt gleichzeitig das Gehäuse der Zug- und Druckvorrichtung 35. Die Hebeböcke 36 sind auf einem Querjoch 67 gelagert, wodurch sie sich in Längsrichtung des Führungsrahmens 34 verschieben lassen. Der Schlitten 66 dient zur Abstützung des Bündelkopfflansches 24 des Rohrbündels 21, wenn dieses aus dem Wärmetauscher 22 herausgefahren oder in diesen eingeschoben wird.

Die Vorrichtung arbeitet wie folgt :

Das Fahrzeug 20 wird — soweit es von etwaigen Vorbauten im Bereich des Wärmetauschers 22 gestattet wird — so vor den Wärmetauscher gefahren, daß der Führungsrahmen 34 in Längsrichtung mit der Längsachse des Wärmetauschers 22 fluchtet. Danach werden die Stützfüße 27 ausgezogen und auf den Boden so abgesenkt, daß die Räder 26 den Bodenkontakt verlieren. Es spielt hierbei keine Rolle, wie der Fahrzeugrahmen 25a in Bezug auf die Längsrichtung des Wärmetauschers steht, da durch eine Drehung der Hubsäule mit dem Drehkranz 29 jeweils der Führungsrahmen 34 exakt auf den Wärmetauscher 22 ausgerichtet werden kann. Die Zug- und Druckvorrichtung 35 steht zu diesem Zeitpunkt noch ca. 50 cm vor dem Ende des Wärmetauschers 22 bzw. dem Bündelkopfflansch 24.

Dann wird mit Hilfe des Hydraulikzylinders 48 der Führungsrahmen so verfahren, daß die Zug- und Druckvorrichtung 35 unmittelbar vor dem Bündelkopfflansch 24 steht und daß die Abstützvorrichtung 37 am Kopfende des Wärmetauschers 22 verankert werden kann. Dabei steht der Schlitten 66 noch wenige Zentimeter unter dem Umfangsrand des Bündelkopfflansches 24.

Mit einem der beiden Zylinder 43 oder 44 wird der Teleskopabschnitt 38 mit dem Führungsrahmen 34 solange gehoben, bis das Rohrbündel 21 über seinen Bündelkopfflansch 24 mit annähernd seinem halben Gesamtgewicht auf dem Schlitten 66 aufliegt. Dann werden in den Bündelkopfflansch Zugelemente eingeschraubt, die den Ziehschlitten mit dem Rohrbündel verbinden.

Danach wird der in der Zug- und Druckvorrichtung 35 untergebrachte Hydraulikmotor 45 in Gang gesetzt, wobei er seine Zugkraft über die Ritzel 46 auf die Zahnstangen 47 überträgt. Die Ausziehgeschwindigkeit kann konstant bei beispielsweise 6 m pro Minute liegen. Sobald das Rohrbündel mit ca. 80 % seiner Länge aus dem Wärmetauscher 22 gezogen ist, wird der dem Wärmetauscher 22 zugewandte Hebebock betätigt, der bis dahin im Führungsrahmen versenkt war. Der Hebebock 36 stützt über die Tragerollen 57 und 56 das Rohrbündel 21 soweit ab, daß dieses leicht aus dem Wärmetauscher 22 gezogen werden kann. Wenn das Rohrbündel 21 den Wärmetauscher 22 vollends verlassen hat, wird es auf den Führungsschlitten noch soweit gezogen, bis der Schwerpunkt der Einhaltführungsschlitten und Rohrbündel in etwa neben der Vertikalachse der Hubsäule liegt. Dazu wird zusätzlich auch der Zylinder 48 betätigt, der die zuvor aus der Mittellage des Führungsrahmens herausführende Bewegung umkehrt, so daß das Ende des Rohrbündels — nachdem die Abstützung 37 gelöst wurde — ca. 50 cm von Kopfende des Wärmetauschers 22 entfernt steht. Danach wird der Führungsrahmen durch die Hubsäule so gedreht, daß er — in Fig. 3 — über den Fahrzeugrahmen abgesenkt werden kann. Danach werden die Stützfüße eingezogen und das Fahrzeug fährt aus eigener Kraft zur Reinigungsstation (Fahrgeschwindigkeit 6 bis 10 km pro Stunde).

Auf dem Reinigungsplatz wird das Rohrbündel entweder direkt an die Reinigungsvorrichtung angeschlossen oder wiederum angehoben und quer zur Fahrzeuglängsrichtung um 90° gedreht, wo es dann auf bereitgestellte Konsolen, Stützböcke oder dergleichen abgelegt wird.

Zum Wiedereinschieben des gereinigten Rohrbündels laufen die zuvor geschilderten Vorgänge in umgekehrter Reihenfolge ab. Für die Bedienung der Vorrichtung genügt eine Bedienungsperson, wobei weder ein zusätzliches Transport- oder Zugfahrzeug noch ein Hebezeug erforderlich sit. Das Fahrzeug mit der integrierten Vorrichtung kann sich sogar selbst mit einem am Boden liegenden Rohrbündel beladen und dieses an anderer Stelle wieder abladen. Dadurch, daß der Führungsrahmen beliebig relativ zum Fahrgestell verdrehbar ist, und die Hubsäule an ihm von unten angreift, läßt sich das Fahrzeug auch dann einsetzen, wenn Vorbauten, Rohrtrassen, elektrische Leitungen oder dgl. in unmittelbarer Nähe des zu entladenden Wärmetauschers den Einsatz eines üblicherweise benutzten Hebezeuges verhindern. Ein weiterer Vorteil ist, daß durch die Verwendung des Hydraulikmotors und dem Zahnstangentrieb der Führungsrahmen nicht überlang ausgebildet werden kann, sondern daß seine tatsächliche Länge nahezu vollständig zum Beladen mit einem langen Rohrbündel genutzt werden kann. Auch das Gewicht des Führungsrahmens ist nur gering, weil weder ein Stützrahmen erforderlich ist noch Antriebsmotoren direkt im Führungsrahmen untergebracht werden müssen, da die Hydraulikversorgung unmittelbar aus dem Fahrzeugrahmen heraus erfolgt. Günstig ist ferner, daß das Rohrbündel auf den mit den Tragrollen ausgestatteten Hebeböcken torsionsfrei drehbar ist, was bisher nicht möglich war. Durch die exzentrische Anordnung der Hubsäule auf dem Fahrzeugrahmen fällt das Fahrzeug nur so breit aus, daß es selbst mit einem aufgeladenen Rohrbündel noch im Straßenverkehr bewegt werden kann. Zudem ergibt sich eine gleichmäßige Lastenverteilung auf die Räder und auch auf die Stützfüße.

**Ansprüche**

1. Vorrichtung (30) zum Herausziehen und Hineinschieben und Heben von Rohrbündeln (21) bei Wärmetauschern (22) mit einem Führungsrahmen (34) für eine darauf längs verschiebbare, mit einem Bündelkopfflansch (24) koppelbare, hydraulische Zug- und Druckvorrichtung (35) und mit in Rahmenlängsrichtung positionierbaren Stützlagern (36) für ein Rohrbündel, dadurch gekennzeichnet, daß die Vorrichtung (30) mit Führungsrahmen (34) in ein vorzugsweise selbstfahrendes Fahrzeug (20) eingegliedert und an einer auf dem Fahrzeugrahmen (25) exzentrisch zur Fahrzeugquer- und Fahrzeuglängsachse und um eine vertikale Achse drehbar angeordneten, hydraulisch aus- und einfahrbaren Hubsäule (31, 32, 38) angebracht ist.

2. Vorrichtung nach Anspruch 1, dadurch gekennzeichnet, daß die Hubsäule aus drei übereinanderschiebbaren Teleskopabschnitten (31, 32, 38) besteht, die über gegen einander versetzt angeordnete Hydraulikzylinder (43, 44) miteinander verbunden sind.

3. Vorrichtung nach einem der Ansprüche 1 oder 2, dadurch gekennzeichnet, daß der Führungsrahmen (34) am obersten Teleskopabschnitt (38) der Hubsäule (31, 32, 38) und seitlich zu dieser versetzt gelegt ist und daß der Teleskopabschnitt (38) mit dem Führungsrahmen (34) über die tieferliegenden Teleskopabschnitte (32, 31) der Hubsäule (31, 32, 38) schiebbar und nach unten bis auf den Fahrzeugrahmen (25a) absenkbar ist.

4. Vorrichtung nach einem der Ansprüche 1 bis 3, dadurch gekennzeichnet, daß die Hubsäule über einen am Fahrzeugrahmen (25a) verankerten Drehkranz (29) um 360° drehbar ist, wobei dem Drehkranz (29) ein Antriebsmotor (41) zugeordnet ist.

5. Vorrichtung nach einem der Ansprüche 1 bis 4, dadurch gekennzeichnet, daß die Zug- und Druckvorrichtung (35) einen Hydraulikmotor (45) enthält, der über ein Abtriebsgetriebe mit wenigstens einer in Rahmenlängsrichtung verlaufenden Zahnstange (47) in Antriebsverbindung steht.

6. Vorrichtung nach Anspruch 1, dadurch gekennzeichnet, daß im Führungsrahmen (34) versenkbar und verschiebbar die Stützlager sich befinden, die als hydraulisch betätigbare Hebeböcke (36) ausgebildet sind.

7. Vorrichtung nach einem der Ansprüche 1 bis 6, dadurch gekennzeichnet, daß der Führungsrahmen (34) am Teleskopabschnitt (38) in einer Schiebeführung (33) gelagert und durch wenigstens einen Hydraulikzylinder (48) relativ zum Teleskopabschnitt (38) längsverschiebbar ist.

8. Vorrichtung nach einem der Ansprüche 1 bis 7, dadurch gekennzeichnet, daß im Fahrzeug bzw. im Fahrzeugrahmen (25a) ein Antriebsmotor (62) für wenigstens eine die hydraulischen Aggregate versorgende Hydraulikpumpe (61) sowie ein Hydrauliktank untergebracht sind.

9. Vorrichtung nach einem der Ansprüche 1 bis 8, dadurch gekennzeichnet, daß am Führungsrahmen (34) an zumindest einem Ende eine mit dem Wärmetauscher (22) verbindbare Abstützung (37) angeordnet ist.

10. Vorrichtung nach einem der Ansprüche 1 bis 9, dadurch gekennzeichnet, daß die Längsholme des Führungsrahmens (34) aus sich mit einem Zwischenabstand parallel gegenüberliegenden I-Profilen (64) gebildet sind, deren Quergurte (65) eine Führungsbahn für die Zug- und Druckvorrichtung (35) und deren Untergurte (69) eine Führungsbahn für die Hebeböcke (36) bilden.

11. Vorrichtung nach einem der Ansprüche 1 bis 10, dadurch gekennzeichnet, daß die Zug- und Druckvorrichtung (35) aus einem Schlitten (66) mit darauf angeordnetem Gehäuse für den Hydraulikmotor (45) und das Abtriebsgetriebe besteht, an dem seitlich wenigstens ein Abtriebsritzel (46) gelagert, ist, das mit einer auf der Oberseite eines Obergurtes (65) angebrachten Zahnstange (47) kämmt.

12. Vorrichtung nach Anspruch 11, dadurch gekennzeichnet, daß in den Schlitten (66) eine Auflage für den Rohrbündel-Kopfflansch (24) eingegliedert ist.

13. Vorrichtung nach einem der Ansprüche 6 bis 12, dadurch gekennzeichnet, daß jeder Hebebock (36) mit vorzugsweise zwei parallel liegenden Rollen (56, 57) ausgestattet ist, deren Achsen (55) in Rahmenlängsrichtung gerichtet sind und die von einem hydraulisch gesteuerten Hebelarm (53) in ihrer Höhe bewegbar sind.

14. Vorrichtung nach einem der Ansprüche 1 bis 13, dadurch gekennzeichnet, daß wenigstens am einen Ende des Führungsrahmens (34) ein Hebezeug oder eine Verankerung (58) für ein Hebezeug (59, 60) vorgesehen ist.

**Claims**

1. Apparatus (30) for extracting and inserting and lifting banks of tubes (21) in heat exchangers (22), which is provided with a guide frame (34) for a hydraulic pulling and pushing device (35) adapted to be displaced longitudinally thereon and to be coupled to a head flange (24) of the bank, and with supporting bearings (36), adapted to be positioned in the longitudinal direction of the frame, for a bank of tubes, characterised in that the apparatus (30) together with the guide frame (34) is incorporated in a preferably self-propelled vehicle (20) and is mounted on a lifting column (31, 32, 38) adapted to be run out and in hydraulically and mounted, for rotation about a vertical axis, on the vehicle frame (25) eccentrically to the transverse and longitudinal axes of the vehicle.

2. Apparatus according to Claim 1, characterised in that the lifting column consists of three telescopic sections (31, 32, 38) adapted to slide one over the other and connected together by hydraulic cylinders (43, 44) which are offset relative to each other.

3. Apparatus according to either of Claims 1 and 2, characterised in that the guide frame (34) is disposed on the top telescopic section (38) of the lifting column (31, 32, 38) and offset laterally relative to the latter, and that the telescopic section (38) with the guide frame (34) is adapted to slide over the lower telescopic sections (32, 31) of the lifting column (31, 32, 38) and to be lowered onto the vehicle frame (25a).

4. Apparatus according to one of Claims 1 to 3, characterised in that the lifting column is rotatable over 360 degrees by means of a slewing ring (29) anchored on the vehicle frame (25a), a drive motor (41) being associated with the slewing ring (29).

5. Apparatus according to one of Claims 1 to 4 characterised in that the pulling and pushing device (35) contains a hydraulic motor (45) which is drivingly connected via output gearing to at least one toothed rack (47) extending in the longitudinal direction of the frame.

6. Apparatus according to Claim 1, characterised in that the supporting bearings, which are in the form of hydraulically operated lifting jacks (36), are disposed in the guide frame (34) so as to be lowerable and slidable.

7. Apparatus according to one of Claims 1 to 6, characterised in that the guide frame (34) is mounted on the telescopic section (38) in a slide guide (33) and is longitudinally slidable relative to the telescopic section (38) by means of at least one hydraulic cylinder (48).

8. Apparatus according to one of Claims 1 to 7, characterised in that in the vehicle or in the vehicle frame (25a) a drive motor (62) for at least one hydraulic pump (61) supplying the hydraulic units and also a hydraulic tank are disposed.

9. Apparatus according to one of Claims 1 to 8, characterised in that a support (37) adapted to be connected to the heat exchanger (22) is provided on the guide frame (34) at least one end.

10. Apparatus according to one of Claims 1 to 9, characterised in that the longitudinal beams of the guide frame (34) are formed of I-sections (64) which are parallel and lie opposite each other with a space between them, and whose transverse flanges (65) form a guide track for the pulling and pushing device (35), while their bottom flanges (69) form a guide track for the lifting jacks (36).

11. Apparatus according to one of Claims 1 to 10, characterised in that the pulling and pushing device (35) consists of a carriage (66) with a casing disposed thereon for the hydraulic motor (45) and the output gearing, on the side of which casing at least one driven pinion (46) is mounted which meshes with a toothed rack (47) mounted on the top face of an upper flange (65).

12. Apparatus according to Claim 11, characterised in hat a support for the head flange (24) of the bank of tubes is incorporated in the carriage (66).

13. Apparatus according to one of Claims 6 to 12, characterised in that each lifting jack (36) is equipped with preferably two rollers (56, 57) lying parallel, whose axes (55) lie in the longitudinal direction of the frame and which are adapted to be moved in respect of their height by means of a hydraulically operated lever arm (53).

14. Apparatus according to one of Claims 1 to 13, characterised in that a lifting means or an anchorage (58) for a lifting means (59, 60) is provided at least at one end of the guide frame (34).

**Revendications**

1. Dispositif (30) permettant d'extraire, d'insérer et de soulever des faisceaux tubulaires (21) d'échangeurs (22), présentant un cadre de guidage (34) pour un dispositif hydraulique de traction/compression (35) qui s'y déplace dans le sens de la longueur et peut être accouplé à une bride de tête du faisceau (24), ainsi que des supports (36) positionnables dans le sens longitudinal du cadre et prévus pour un faisceau, caractérisé en ce que le dispositif (30), avec le cadre de guidage (34), est incorporé à un véhicule (20) automoteur de préférence, et est prévu sur une colonne de levage (31, 32, 38) à commande hydraulique, montée sur le châssis (25a) du véhicule, excentrée par rapport aux axes longitudinal et transversal de ce dernier et pouvant tourner autour d'un axe vertical.

2. Dispositif selon la revendication 1, caractérisé en ce que la colonne de levage se compose de trois sections télescopiques (31, 32, 38), reliées par l'intermédiaire de vérins hydrauliques (43, 44) décalés l'un par rapport à l'autre.

3. Dispositif selon une des revendications 1 et 2, caractérisé en ce que le cadre de guidage (34) est prévu sur la section télescopique supérieure (38) de la colonne de levage (31, 32, 38), par rapport à laquelle il présente un certain décalage latéral, et en ce que la section (38) et le cadre (34) peuvent être abaissés, par l'intermédiaire des sections sous-jacentes (32, 31) de la colonne (31, 32, 38), jusqu'au châssis (25a) du véhicule.

4. Dispositif selon une quelconque des revendications 1 à 3, caractérisé en ce que l'orientation de la colonne de levage peut être modifiée de 360° par l'intermédiaire d'une couronne (29) ancrée sur le châssis (25a) du véhicule, un moteur de commande (41) étant affecté à cette même couronne (29).

5. Dispositif selon une quelconque des revendications 1 à 4, caractérisé en ce que le dispositif de traction/compression (35) comporte un moteur hydraulique (45) relié, par l'intermédiaire d'une transmission, à une crémaillère au moins (47) prévue dans le sens longitudinal du cadre.

6. Dispositif selon la revendication 1, caractérisé par la présence de paliers d'appui mobiles et abaissables dans le cadre de guidage (34), représentés par des supports de levage (36) à commande hydraulique.

7. Dispositif selon une quelconque des revendications 1 à 6, caractérisé en ce que le cadre de guidage (34) est monté dans une glissière (33) sur la section télescopique (38), par rapport à laquelle un vérin hydraulique (48) au moins lui confère un déplacement longitudinal.

8. Dispositif selon une quelconque des revendications 1 à 7, caractérisé en ce que le véhicule et/ou son châssis (25a) comporte un moteur de commande (62) pour une pompe hydraulique au moins (61) alimentant les différents groupes hydrauliques, ainsi qu'un réservoir pour le fluide correspondant.

9. Dispositif selon une quelconque des revendications 1 à 8, caractérisé en ce que l'une des extrémités au moins du cadre de guidage (34) présente un support (37), qui peut être assemblé avec l'échangeur (22).

10. Dispositif selon une quelconque des revendications 1 à 9, caractérisé en ce que les montants longitudinaux du cadre de guidage (34) se composent de profilés en I (64) parallèles et distants l'un de l'autre, dont les membrures supérieures (65) et inférieures (69) constituent respectivement des glissières pour le dispositif de traction/compression (35) et les supports de levage (36).

11. Dispositif selon une quelconque des revendications 1 à 10, caractérisé en ce que le dispositif de traction/compression (35) se compose d'un chariot (66) supportant un carter pour le moteur hydraulique (45) et sa transmission, un pignon (46) au moins, monté latéralement, engrenant avec une crémaillère (47) prévue sur la face supérieure de la membrure (65).

12. Dispositif selon la revendication 11, caractérisé par l'incorporation au chariot (66) d'un support pour la bride de tête (24) du faisceau tubulaire.

13. Dispositif selon une quelconque des revendications 6 à 12, caractérisé en ce que chaque support de levage (36) est de préférence équipé de deux galets parallèles (56, 57), dont les axes (55) sont orientés dans le sens longitudinal du cadre et qu'un bras de levier (53) à commande hydraulique permet de déplacer en hauteur.

14. Dispositif selon une quelconque des revendications 1 à 13, caractérisé en ce que l'une des extrémités au moins du cadre de guidage (34) présente un engin de levage, ou un ancrage (58) pour un engin de levage (59, 60).

# Fig. 4

56  53  57

35

66

34

47
65

64  69

36

67  64

# Fig. 1

35  24  23  25  21  22

34  36  32  33  36  37

30

31  29

26  28  25 a

27

20

1

# Fig. 2

0 053 757

Fig. 3

3